# EUROPEAN PATENT APPLICATION

(11) **EP 4 560 579 A1**
(43) Date of publication of application: **28.05.2025**
(21) Application number: 24212442.8
(22) Date of filing: 12.11.2024
(51) Int. Cl.: G06T 11/20

(54) **DISPLAY CONTROL DEVICE, DISPLAY METHOD, AND DISPLAY PROGRAM**

(30) Priority: 24.11.2023 JP 2023199395
(71) Applicant: TOYOTA JIDOSHA KABUSHIKI KAISHA, Aichi-ken, 471-8571 (JP)
(72) Inventor: YANO, Masao, Toyota-shi, 471-8571 (JP); IDE, Kazuto, Toyota-shi, 471-8571 (JP); AOKI, Ryo, Toyota-shi, 471-8571 (JP)
(74) Representative: D Young & Co LLP

(57) **Abstract**

A display control device (20) includes a processor (20A) configured to: cause a display device (26) to display a data image (300) indicating a visualized measurement range of analysis target data (120) and a range image (310) indicating a visualized analysis range of the analysis target data (120) in a juxtaposed or superimposed fashion in which directions of the visualized measurement range and the visualized analysis range agree with each other; and perform a predetermined analysis in an analysis range.

## Description

### BACKGROUND OF THE INVENTION

### 1. Field of the Invention

The present invention relates to a display control device, a display method, and a display program.

### 2. Description of Related Art

Japanese Unexamined Patent Application Publication No. 2020-038514 (JP 2020-038514 A) describes a configuration for preprocessing data before analyzing the data.

### SUMMARY OF THE INVENTION

When analyzing pieces of measurement data of a sample, it may be necessary to align the measurement ranges of the pieces of measurement data. In this case, it is necessary to preprocess the pieces of measurement data. In the configuration of JP 2020-038514 A, the pieces of measurement data need to be preprocessed appropriately in view of the lengths of the measurement ranges of the pieces of measurement data, the characteristics of the pieces of measurement data, etc. When selecting an appropriate preprocessing method by a user's instruction, there is room for improvement.

The present invention provides a display control device with which a preprocessing method suitable for pieces of measurement data is selected in response to a user's instruction.

A display control device according to a first aspect of the present invention includes a processor configured to cause a display device to display a data image indicating a visualized measurement range of analysis target data and a range image indicating a visualized analysis range of the analysis target data in a juxtaposed or superimposed fashion in which directions of the visualized measurement range and the visualized analysis range agree with each other; and perform a predetermined analysis in an analysis range.

The display control device according to the first aspect of the present invention causes the display device to display the data image and the analysis range of the data in the juxtaposed or superimposed fashion in which the directions indicating the ranges agree with each other. Thus, it is possible to visually display an excess or deficiency of the range of the analysis target data relative to the analysis range. The description "the directions indicating the ranges agree with each other" means that the directions of extension and contraction of the data image that changes depending on values and the analysis range agree with each other. The term "display in the juxtaposed fashion" includes display of items side by side and display of items vertically. The term "display in the superimposed fashion" includes display of a base image and a superimposed image by synthesis and display of the superimposed image that pops up on the base image. With the display control device, a preprocessing method suitable for measurement data can be selected in response to a user's instruction.

In the above aspect, the processor may be configured to cause the display device to display a plurality of the data images and the range image in the juxtaposed or superimposed fashion in which the directions of the visualized measurement ranges and the visualized analysis range agree with each other.

In the display control device according to the above aspect, the display device displays the data images and the analysis range of the data in the juxtaposed or superimposed fashion in which the directions indicating the ranges agree with each other. Thus, it is possible to visually display a list of excesses or deficiencies of the ranges of the pieces of analysis target data relative to the analysis range.

In the above aspect, the processor may be configured to cause the display device to further display a setting screen for a data processing method in the juxtaposed or superimposed fashion, the data processing method being method of causing the visualized measurement range to agree with the visualized analysis range.

In the display control device according to the above aspect, the display device further displays, in the juxtaposed or superimposed fashion, the setting screen for the data processing method for causing the measurement range of the data to agree with the analysis range of the data. Thus, the data processing method can be set while checking the data image and the analysis range of the data.

In the above aspect, the processor may be configured to cause the display device to display the data image before being processed by the data processing method and the data image after being processed by the data processing method in the juxtaposed or superimposed fashion in which the direction of the visualized measurement range of the data image before being processed by the data processing method and the direction of the visualized measurement range of the data image after being processed by the data processing method agree with each other.

In the display control device according to the above aspect, the display device displays the data images before and after being processed in the juxtaposed or superimposed fashion in which the directions indicating the ranges agree with each other. Thus, the change in the range of the data due to processing can be displayed visually.

In the above aspect, the processor may be configured to determine the data processing method to be recommended for use based on at least one of the analysis target data and a history of the processing methods selected by a user; and cause the display device to display the determined data processing method.

The display control device according to the above aspect determines the processing method to be recommended for use based on at least one of the data and the history of the processing methods selected by the user, and causes the display device to display the processing method. For example, a trained model is generated by performing machine learning based on past processing methods determined for the analysis target data, and the recommended processing method is determined by inputting data to be processed to the generated trained model. With the display control device, it is possible to propose a processing method suitable for the analysis target data.

A display method to be performed by a computer according to a second aspect of the present invention includes causing a display device to display a data image indicating a visualized measurement range of analysis target data and a range image indicating a visualized analysis range of the analysis target data in a juxtaposed or superimposed fashion in which directions of the visualized measurement range and the visualized analysis range agree with each other; and performing a predetermined analysis in an analysis range.

In the display method according to the second aspect of the present invention, the display device displays the data image and the analysis range of the data in the juxtaposed or superimposed fashion in which the directions indicating the ranges agree with each other. Thus, it is possible to visually display an excess or deficiency of the range of the analysis target data relative to the analysis range. Thus, a preprocessing method suitable for measurement data can be selected in response to a user's instruction.

A display program according to a third aspect of the present invention causes a computer to perform a process of causing a display device to display a data image that indicating a visualized measurement range of analysis target data and a range image indicating a visualized analysis range of the analysis target data in a juxtaposed or superimposed fashion in which directions of the visualized measurement range and the visualized analysis range agree with each other; and performing a predetermined analysis in an analysis range.

A display program to be executed by a computer according to the third aspect of the present invention causes the computer to perform a process including causing a display device to display to display the data image and the analysis range of the data in the juxtaposed or superimposed fashion in which the directions indicating the ranges agree with each other. Thus, it is possible to visually display an excess or deficiency of the range of the analysis target data relative to the analysis range. Thus, a preprocessing method suitable for measurement data can be selected in response to a user's instruction.

According to the present invention, a preprocessing method suitable for pieces of measurement data can be selected in response to the user's instruction.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing the hardware configuration of a display system according to a first embodiment;
FIG. 2 is a block diagram showing the configuration of a ROM according to the first embodiment;
FIG. 3 is a block diagram showing the configuration of a storage according to the first embodiment;
FIG. 4 is a block diagram showing the functional configuration of a CPU according to the first embodiment;
FIG. 5 is a first diagram showing an outline of a check screen according to the first embodiment;
FIG. 6 is a second diagram showing the outline of the check screen according to the first embodiment;
FIG. 7 shows an outline of an instruction screen according to the first embodiment;
FIG. 8 is a third diagram showing the outline of the check screen according to the first embodiment;
FIG. 9 is a fourth diagram showing the outline of the check screen according to the first embodiment;
FIG. 10 is a flowchart showing a flow of data processing according to the first embodiment;
FIG. 11 is a block diagram showing the functional configuration of a CPU according to a modification of a second embodiment;
FIG. 12 is a flowchart showing a flow of a determination process according to the modification of the second embodiment; and
FIG. 13 shows an outline of a check screen according to the modification of the second embodiment.

### DETAILED DESCRIPTION OF EMBODIMENTS

### First Embodiment

### Configuration

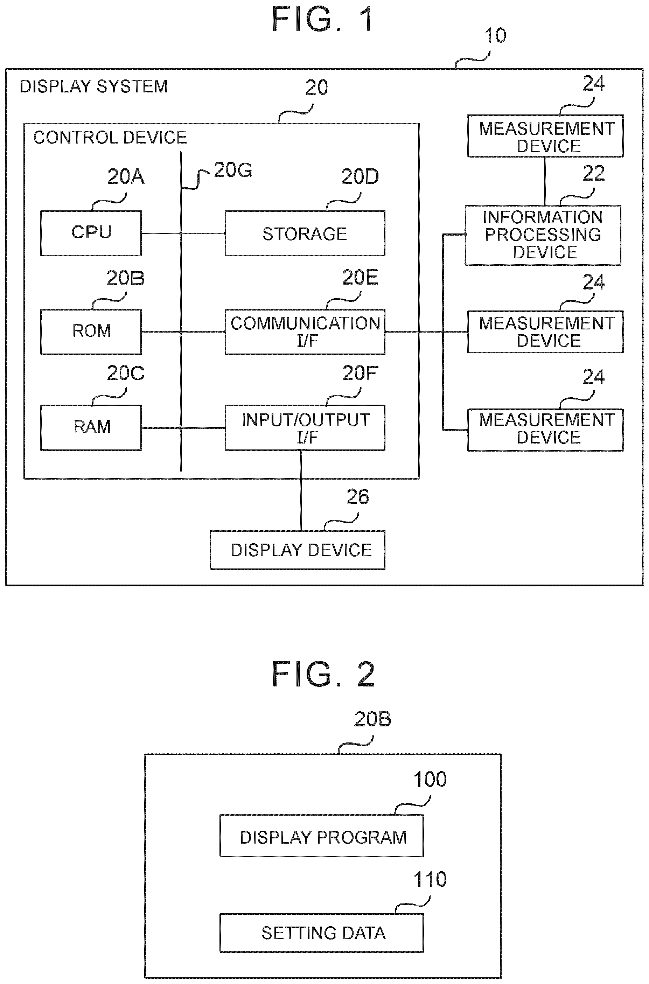

FIG. 1 shows a display system 10 of the present embodiment. The display system 10 of the present embodiment checks the ranges of pieces of measurement data serving as analysis target data, and processes the pieces of measurement data.

In the present embodiment, "processing" refers to data processing. Specifically, the "processing" includes extending, contracting, interpolating, and shifting data. The interpolation includes known interpolation methods such as linear interpolation and spline interpolation in addition to a method of interpolating data with a specified value.

As shown in FIG. 1, the display system 10 of the present embodiment includes a control device 20 serving as a display control device, an information processing device 22, measurement devices 24, and a display device 26.

The control device 20 includes a central processing unit (CPU) 20A, a read only memory (ROM) 20B, a random access memory (RAM) 20C, a storage 20D, a communication interface (I/F) 20E, and an input/output I/F 20F. The CPU 20A, the ROM 20B, the RAM 20C, the storage 20D, the communication I/F 20E, and the input/output I/F 20F are connected to communicate with each other via a bus 20G.

The CPU 20A is a central processing unit that executes various programs and controls each part. That is, the CPU 20A reads a program from the ROM 20B or the storage 20D, and executes the program using the RAM 20C as a working area.

The ROM 20B stores various programs and various types of data. As shown in FIG. 2, the ROM 20B of the present embodiment stores a display program 100 and setting data 110. The display program 100 and the setting data 110 may be stored in the storage 20D.

The display program 100 causes the display device 26 to display measurement data to be processed, and also performs data processing described later.

The setting data 110 is referenced when processing measurement data described later. Specifically, the setting data 110 stores setting values such as an analysis range necessary for processing instructions, whether to extend or contract the measurement data, a method for shifting the measurement data, and a method for interpolating the measurement data.

As shown in FIG. 1, the RAM 20C temporarily stores programs or data as a working area.

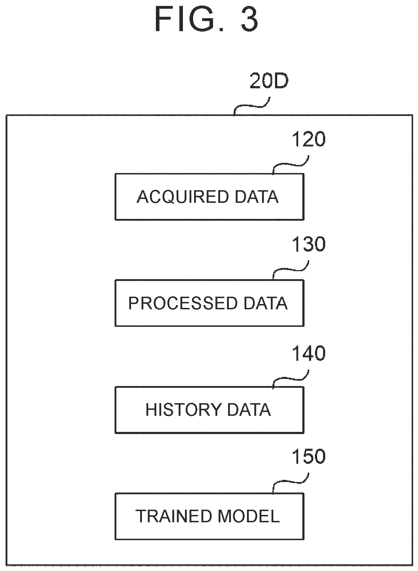

The storage 20D is a hard disk drive (HDD) or a solid state drive (SSD), and stores various programs and various types of data. As shown in FIG. 3, the storage 20D of the present embodiment stores acquired data 120, processed data 130, history data 140 serving as a history of processing methods, and a trained model 150. The acquired data 120, the processed data 130, the history data 140, and the trained model 150 may be stored in the ROM 20B.

The acquired data 120 stores measurement data transferred from the information processing device 22, measurement data acquired from the measurement device 24, etc. Specifically, the measurement data stored in the acquired data 120 is waveform data, time series data, etc. The measurement data stored in the acquired data 120 is, for example, analysis data obtained by X-ray diffraction (XRD) or an electrocardiogram.

The processed data 130 stores measurement data obtained after processing the measurement data in the data processing described later.

The history data 140 stores information on a history of processing methods selected by users for individual pieces of measurement data. Specifically, the history data 140 stores the type of excess or deficiency of a measurement range of measurement data relative to an analysis range, the proportion of each type of excess or deficiency in the measurement data, and a processing method specified by a user. The type of excess or deficiency includes excess or deficiency of the measurement range of the measurement data relative to the analysis range, and a direction of the excess or deficiency of the data (e.g., right or left when a data range is plotted on the horizontal axis).

The trained model 150 is trained based on the history data 140. Specifically, the trained model 150 is a trained model that has undergone machine learning using, as training data, the history of processing methods for the individual pieces of measurement data acquired by an acquisition unit 240 described later. For example, when information including a measurement range of measurement data and an analysis range is input, the trained model 150 outputs a recommended processing method for the measurement data.

As shown in FIG. 1, the communication I/F 20E is an interface for communicating with external devices. Specifically, the communication I/F 20E of the present embodiment communicates with the information processing device 22 and a plurality of measurement devices 24.

The information processing device 22 communicates bidirectionally with the control device 20. In response to a request from the control device 20, the information processing device 22 of the present embodiment transmits, to the control device 20, measurement data acquired from the measurement device 24 that communicates with the information processing device 22.

The input/output I/F 20F is an interface for connecting to an input/output device. Specifically, the input/output I/F 20F of the present embodiment is connected to the display device 26. The display device 26 may be connected directly to the bus 20G.

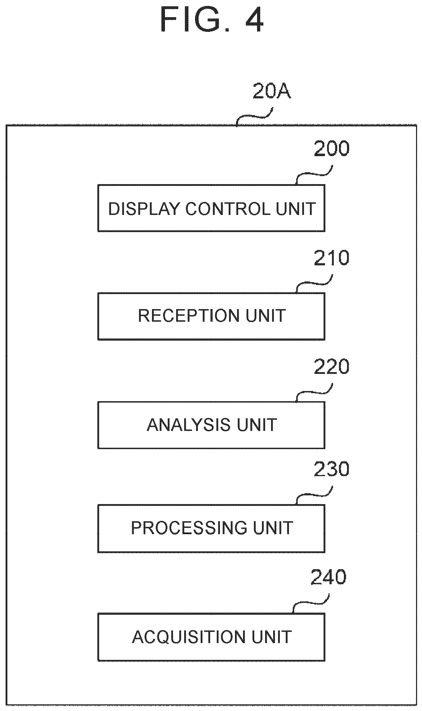

As shown in FIG. 4, the control device 20 of the present embodiment functions as a display control unit 200, a reception unit 210, an analysis unit 220, a processing unit 230, and the acquisition unit 240 by the CPU 20A executing the display program 100.

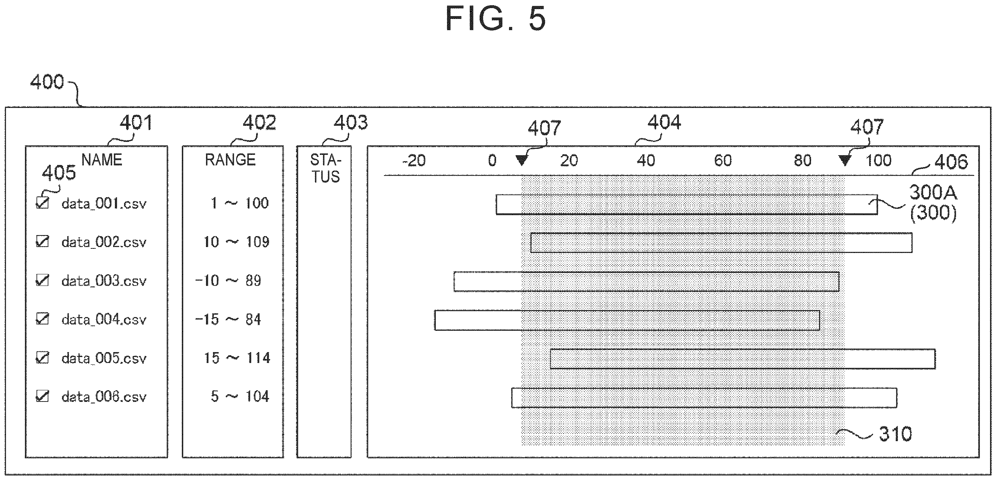

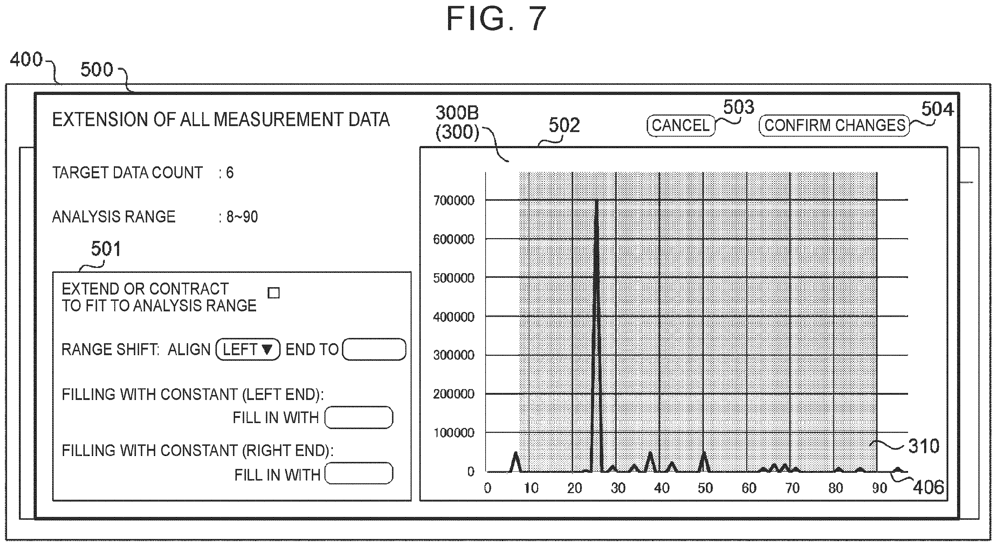

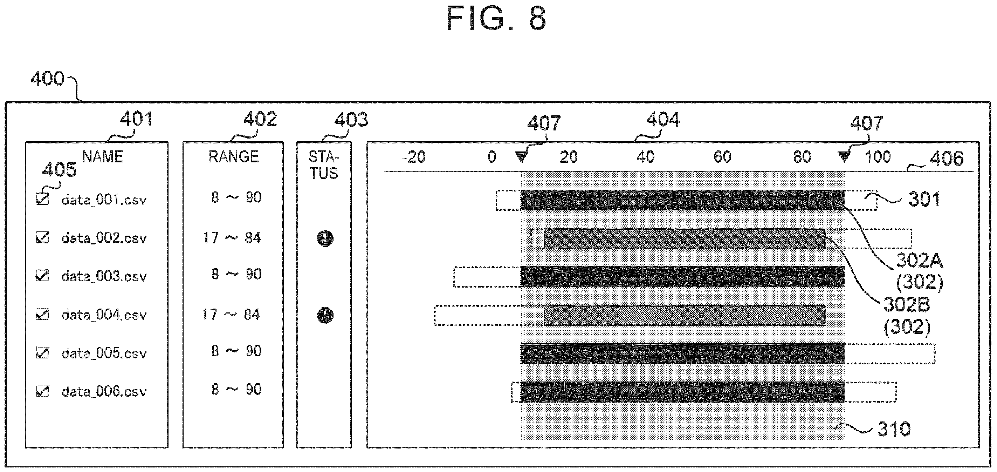

The display control unit 200 has a function of displaying images and screens related to the processing of measurement data. Specifically, the display control unit 200 causes the display device 26 to display images and screens related to the processing of measurement data. The display control unit 200 displays, for example, a measurement image 300 as a data image indicating a visualized measurement range of the measurement data, a range image 310 indicating a visualized analysis range, and a check screen 400 for checking the measurement image 300 and the range image 310 (see FIG. 5). The display control unit 200 also displays an instruction screen 500 (see FIG. 7) for a processing method for the measurement data, a measurement image 301 (see FIG. 8) showing the measurement data before processing, and a processed image 302 (see FIG. 8) showing the measurement data after processing.

The display control unit 200 of the present embodiment displays the measurement image 300 and the range image 310 in a juxtaposed or superimposed fashion so that the directions indicating the ranges agree with each other. The display control unit 200 displays the check screen 400 and the instruction screen 500 in a juxtaposed or superimposed fashion. The display control unit 200 displays the measurement image 301 and the processed image 302 in a juxtaposed or superimposed fashion so that the directions indicating the ranges agree with each other. The description "the directions indicating the ranges agree with each other" means that the directions of extension and contraction of the images that change depending on values, that is, the axis directions of values indicating the measurement data or the analysis range (see "reference axis 406" described later), agree with each other. In the present embodiment, the measurement image 300 and the range image 310 as well as the measurement image 301 and processed image 302 displayed on the check screen 400 are extended or contracted in the same direction. In the check screen 400 of the present embodiment, the lateral direction is the "direction indicating the range" (see FIGS. 5, 6, 8, and 9).

The reception unit 210 has a function of receiving an analysis range. The reception unit 210 receives, for example, an analysis range input by a user.

The reception unit 210 also has a function of receiving processing instructions. Specifically, the reception unit 210 receives setting values of a processing method determined on the instruction screen 500. For example, the reception unit 210 receives setting values of whether to extend or contract the measurement data, a method for shifting the measurement data, and a method for interpolating the measurement data.

The analysis range and the processing instructions received by the reception unit 210 are applied to the setting data 110 in the ROM 20B and reflected in the history data 140 in the storage 20D.

The analysis unit 220 analyzes whether the measurement range of the measurement data is excessive or insufficient relative to the analysis range. Specifically, the analysis unit 220 analyzes excess or deficiency of the measurement range of the measurement data relative to the analysis range, and a direction of the excess or deficiency of the data.

The analysis unit 220 analyzes the proportion of the excess or deficiency of the measurement range of the measurement data relative to the analysis range. Specifically, the analysis unit 220 analyzes the proportion of the excess or deficiency of the measurement range of the measurement data relative to the analysis range to the entire measurement range of the measurement data before processing.

The analysis unit 220 reflects the analyzed information in the history data 140.

The processing unit 230 has a function of processing the measurement data. As the data processing, the processing unit 230 of the present embodiment processes the measurement data based on a processing instruction received by the reception unit 210. The processing unit 230 reflects the processed data 130 obtained after processing the measurement data in the storage 20D.

The acquisition unit 240 has a function of acquiring the measurement data. Specifically, the acquisition unit 240 acquires the measurement data from the information processing device 22 or the measurement device 24. The acquisition unit 240 reflects the acquired measurement data in the acquired data 120 in the storage 20D. The acquisition unit 240 acquires all the pieces of measurement data to be analyzed from the acquired data 120 in the storage 20D at the start of the data processing described later.

### Screen Transition

Transition of screens during the data processing described later that is executed by the control device 20 of the present embodiment will be described with reference to FIGS. 5 to 9. The screens in FIGS. 5 to 9 are displayed on the display device 26.

When the data processing is started, all the pieces of measurement data to be analyzed are acquired, and the analysis range is received in the control device 20, the CPU 20A displays the check screen 400 as shown in FIG. 5. The check screen 400 is a screen for checking the measurement ranges of the pieces of measurement data to be analyzed. The check screen 400 of the present embodiment includes a name field 401 including file names for identifying the pieces of measurement data and check boxes 405 for selecting files, a range field 402 showing ranges of measurement of the pieces of measurement data, a status field 403 showing statuses as to whether processing is necessary for the pieces of measurement data, and a measurement image field 404 showing a plurality of measurement images 300.

An example of the check screen 400 shown in FIG. 5 will be described below. In the present embodiment, the analysis range is described as "8 to 90".

In the name field 401, file names "data_001.csv", "data_002.csv", "data_003.csv", "data_004.csv", "data_005.csv", and "data_006.csv" are displayed vertically. The check boxes 405 are displayed at the left of the file names. All the check boxes 405 in FIG. 5 are displayed with check marks, which means that all the files are selected for processing.

In the range field 402, numerical values "1 to 100" corresponding to the measurement range of the measurement data in the file "data_001.csv" are displayed in a row indicating that file. In the range field 402, "10 to 109" corresponding to "data_002.csv", "-10 to 89" corresponding to "data_003.csv", "-15 to 84" corresponding to "data_004.csv", "15 to 114" corresponding to "data_005.csv", and "5 to 104" corresponding to "data_006.csv" are similarly displayed in rows indicating these files.

In the measurement image field 404, the reference axis 406 indicating a reference of the measurement range, a plurality of measurement images 300A, the range image 310, and position images 407 showing the positions of upper and lower limits of the analysis range are displayed. The reference axis 406 is a straight line indicating the axis of values represented by the measurement images 300A and the range image 310, and extends at the upper part of the measurement image field 404 along an extension and contraction direction of the measurement images 300A and the range image 310. In the present embodiment, the reference axis 406 is displayed as the horizontal axis in the measurement image field 404. Numerical values (-20, 0, 20, 40, 60, 80, 100) indicating values of the measurement range are displayed at equal intervals along the reference axis 406. The numerical values vary depending on the physical quantity, ratio, proportion, etc. of the measurement data. The measurement image 300A is a measurement image 300 showing the measurement data in each file with its measurement range displayed in the form of a horizontal rectangle. The extension and contraction directions of the measurement images 300A are displayed in the rows indicating the files to agree with the direction of the reference axis 406. The range image 310 is a rectangular image showing the analysis range, and is transparently superimposed on the measurement images 300A. The extension and contraction direction of the range image 310 agrees with the direction of the reference axis 406. The position image 407 is displayed as an image of an inverted triangle on the reference axis 406. The position images 407 are displayed at the positions corresponding to the upper and lower limits of the range shown by the range image 310.

The range image 310 may be juxtaposed to the measurement images 300A as a bar-shaped figure having a length corresponding to the analysis range or as a figure having arrows at both ends and having a length corresponding to the analysis range. The range image 310 may be displayed as straight lines or dashed lines extending vertically downward from the positions of the upper and lower limits of the analysis range on the reference axis 406 indicating the reference of the measurement range. The range image 310 may be transparently superimposed on the measurement images 300A as an image that fills in the areas outside the analysis range.

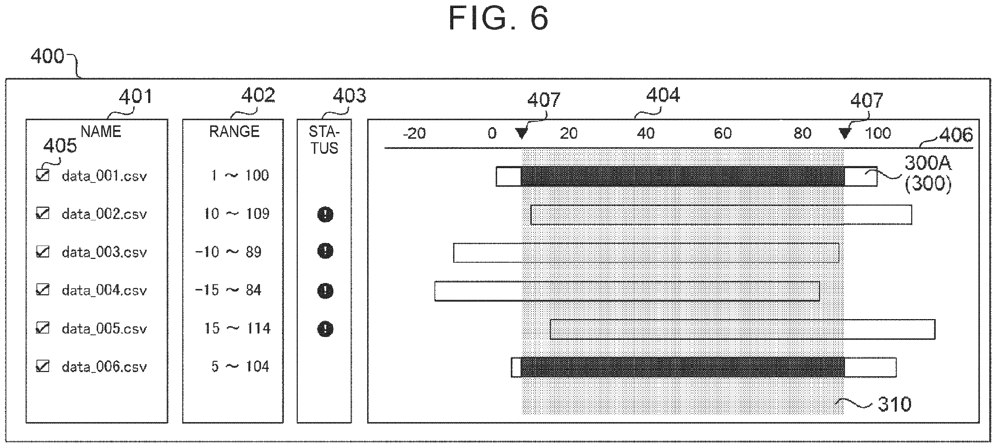

Although nothing is displayed in the status field 403 in FIG. 5, description will be given in conjunction with FIG. 6.

As shown in FIG. 6, the CPU 20A causes the check screen 400 to display an indication as to whether the measurement range of the measurement data is insufficient relative to the analysis range. Differences from FIG. 5 will be described below. The other configuration is the same as that in FIG. 5, and detailed description thereof will be omitted.

When the measurement range of the measurement data is insufficient relative to the analysis range, a mark indicating the need to process the measurement data is displayed in the row indicating the target file in the status field 403 in FIG. 6. In each of the files "data_002.csv" to "data_005.csv", the measurement range is insufficient relative to the analysis range of 8 to 90. Therefore, the mark indicating the need to process the measurement data is displayed.

When the measurement range of the measurement data is sufficient relative to the analysis range, a highlight is displayed in the measurement image field 404. For example, the highlight is displayed as a blue image at a portion of the measurement image 300A that overlaps the analysis range.

As shown in FIG. 7, when the measurement range of the measurement data is excessive or insufficient relative to the analysis range, the CPU 20A displays the instruction screen 500 as a setting screen. The instruction screen 500 is a screen for instruction on a processing method for the measurement data. The instruction screen 500 of the present embodiment includes an instruction field 501 for inputting an instruction on a processing method, and a measurement image field 502 showing a measurement image 300B. The measurement image 300B is a measurement image 300 showing the measurement data in the form of a graph (X-axis: measurement range, Y-axis: measurement value). The instruction screen 500 is superimposed on the check screen 400 in the form of a dialog window. The instruction screen 500 need not essentially be superimposed on the check screen 400, and the dialog window showing the instruction screen 500 may be moved to display the instruction screen 500 and the check screen 400 without an overlap.

An example of the instruction screen 500 shown in FIG. 7 will be described below. The instruction screen 500 described below is displayed when processing the measurement data in the file "data_001.csv".

As shown in FIG. 7, the number of pieces of measurement data in the processing target file with a check mark in the check box 405 and numerical values indicating the analysis range are displayed in the upper left area of the instruction screen 500. Specifically, the number of pieces of measurement data to be processed is "6" and the analysis range is "8 to 90".

In the instruction field 501, a check box for determining whether to extend or contract the measurement data, an input field for inputting a method for shifting the measurement data, and an input field for inputting a value to be used for data interpolation in the measurement data are displayed. The input field for inputting a method for shifting the measurement data includes a pull-down menu for selecting "right" or "left" indicating the direction of the X-axis that is the direction of the analysis range shown by the range image 310, and an input field for inputting a value on the X-axis. The input field for interpolation of the measurement data includes an input field for inputting any measurement value that fills in a missing part of the data at the left end, and an input field for inputting any measurement value that fills in a missing part of the data at the right end.

In the measurement image field 502, the measurement image 300B showing the measurement data in the file "data_001.csv" and the range image 310 are displayed. The range image 310 is transparently superimposed on the measurement image 300B. The measurement image 300B may be displayed while being changed to an image showing the processed measurement data (so-called preview display) in accordance with the input processing instruction.

A cancellation button 503 and a confirmation button 504 are provided in the upper right area of the instruction screen 500. The user can cancel the processing instruction by clicking the cancellation button 503. The user can confirm the processing instruction by clicking the confirmation button 504.

When the user clicks the confirmation button 504, the CPU 20A receives the processing instruction. Thus, the measurement data in the file "data_001.csv" is processed in accordance with the input instruction. Next, the CPU 20A refreshes the instruction screen 500 based on the measurement data in the file "data_002.csv", and receives a processing instruction. That is, the CPU 20A sequentially refreshes the instruction screen 500 for the pieces of measurement data in all the files with check marks in the check boxes 405, and receives processing instructions.

After the CPU 20A receives the processing instructions for the pieces of measurement data in all the files with check marks in the check boxes 405, the CPU 20A erases the instruction screen 500 and displays the check screen 400 updated based on the pieces of processed measurement data. When there is a file in which the analysis range does not agree with the measurement range of the processed measurement data, the CPU 20A displays the check screen 400 as shown in FIG. 8.

An example of the check screen 400 shown in FIG. 8 will be described below. Differences from FIG. 6 will be described below. The other configuration is the same as that in FIG. 6, and detailed description thereof will be omitted.

In the range field 402 in FIG. 8, the measurement ranges of the pieces of processed measurement data are displayed. In the range field 402, numerical values "8 to 90" corresponding to the measurement range of the processed measurement data in the file "data_001.csv" are displayed in the row indicating that file. In the range field 402, "17 to 84" corresponding to "data_002.csv" and "data_004.csv" and "8 to 90" corresponding to "data_003.csv", "data_005.csv", and "data_006.csv" are similarly displayed in the rows indicating these files.

In each of the files "data_002.csv" and "data_005.csv", the measurement range is insufficient relative to the analysis range. Therefore, the mark indicating the need to process the measurement data is displayed in the status field 403.

In the measurement image field 404, the measurement images 301 showing the measurement ranges of the pieces of measurement data before processing, the processed images 302 showing the measurement ranges of the pieces of measurement data after processing, and the range image 310 are displayed. The measurement image 301 corresponds to the measurement image 300A represented by a dashed line. The processed image 302 is superimposed on the measurement image 301. The processed images 302 include a processed image 302A showing a case where the measurement range after processing agrees with the analysis range, and a processed image 302B showing a case where the measurement range after processing does not agree with the analysis range. The processed image 302A is a blue image, and the processed image 302B is a dark gray image.

Since the measurement ranges of the pieces of measurement data are insufficient relative to the analysis range, the CPU 20A displays the instruction screen 500 again. The instruction screen 500 may be displayed only for the files in which the analysis range does not agree with the measurement ranges.

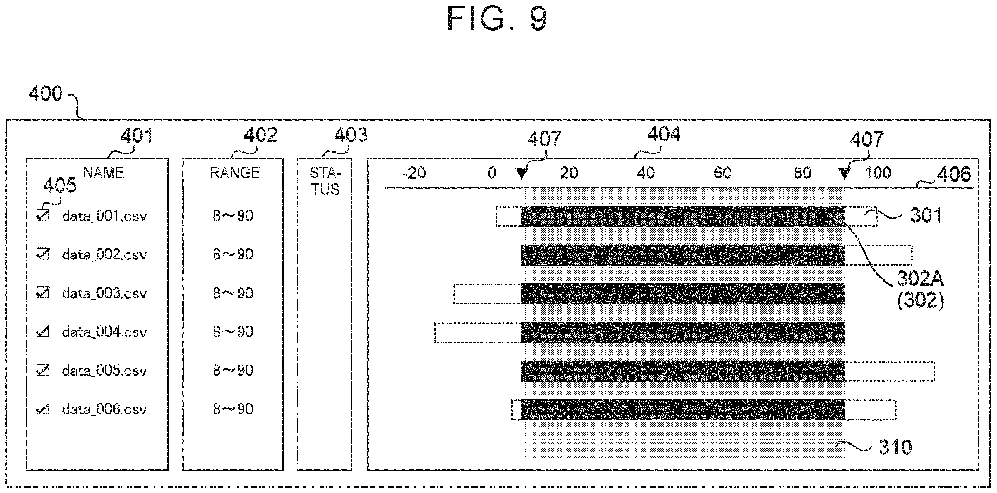

When the processing instructions are received and the analysis range agrees with the measurement ranges of all the pieces of measurement data, the CPU 20A displays the check screen 400 as shown in FIG. 9.

An example of the check screen 400 shown in FIG. 9 will be described below. Differences from FIG. 8 will be described below. The other configuration is the same as that in FIG. 8, and detailed description thereof will be omitted.

In the range field 402, "8 to 90" indicating the range of the processed measurement data in each file is displayed. This range agrees with the analysis range.

Since there is no excess or deficiency of the measurement ranges of all the pieces of measurement data relative to the analysis range, the mark indicating the need to process the measurement data is not displayed in the status field 403. A mark indicating that the measurement range agrees with the analysis range may be displayed.

The CPU 20A ends the screen transition in the data processing described later. Then, the CPU 20A performs a predetermined analysis based on the processed data 130 including the pieces of measurement data after processing. The CPU 20A learns the processing instructions from the user.

### Control Flow

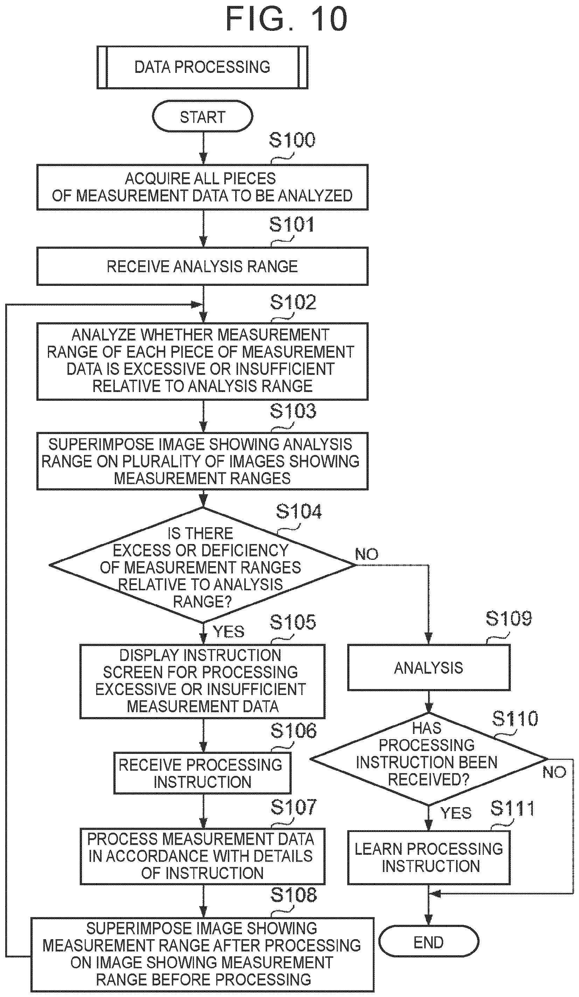

FIG. 10 is a flowchart showing a flow of the data processing for the measurement data according to the present embodiment. The process in the control device 20 is implemented by the CPU 20A functioning as the display control unit 200, the reception unit 210, the analysis unit 220, the processing unit 230, and the acquisition unit 240.

In step S 100 of FIG. 10, the CPU 20A acquires all pieces of measurement data to be analyzed. For example, the CPU 20A acquires all the pieces of measurement data to be analyzed from the acquired data 120 stored in the storage 20D.

In step S 101, the CPU 20A receives an analysis range. For example, the CPU 20A receives a range "8 to 90" input by a user.

In step S102, the CPU 20A analyzes whether the measurement range of each piece of measurement data is excessive or insufficient relative to the analysis range. Specifically, the CPU 20A analyzes whether the measurement range of each piece of measurement data is excessive or insufficient relative to the analysis range, the direction of the excess or deficiency of the data, and the proportion of the excess or deficiency.

In step S103, the CPU 20A superimposes an image showing the analysis range on a plurality of images showing the measurement ranges. Specifically, the CPU 20A synthesizes the range image 310 on the measurement images 300A (see FIGS. 5 and 6).

In step S104, the CPU 20A determines whether there is an excess or deficiency of the measurement ranges relative to the analysis range. When the CPU 20A determines that there is an excess or deficiency (S104: YES), the CPU 20A proceeds to step S105. When the CPU 20A determines that there is no excess or deficiency (S104: NO), the CPU 20A proceeds to step S109.

In step S105, the CPU 20A displays the instruction screen 500 for processing the excessive or insufficient measurement data. Specifically, the CPU 20A superimposes the instruction screen 500 on the check screen 400 (see FIG. 7). For example, the CPU 20A displays the instruction screen 500 as a dialog window.

In step S106, the CPU 20A receives a processing instruction. Specifically, the CPU 20A receives data input by the user in the instruction field 501 of the instruction screen 500. The CPU 20A applies the received processing instruction to the setting data 110 in the ROM 20B and reflects the processing instruction in the history data 140 in the storage 20D.

In step S107, the CPU 20A processes the measurement data in accordance with details of the instruction. Specifically, the CPU 20A processes the measurement data in the file with a check mark in the check box 405 in accordance with the processing instruction received in step S106. The CPU 20A stores the processed measurement data in the processed data 130 in the storage 20D.

In step S108, the CPU 20A superimposes an image showing the measurement range after processing on the image showing the measurement range before processing. Specifically, the CPU 20A superimposes the processed image 302 on the measurement image 301 (see FIG. 8). The CPU 20A returns to step S102.

In step S109, the CPU 20A performs a predetermined analysis. Specifically, the CPU 20A performs the predetermined analysis using the processed data 130 in which the analysis range agrees with the measurement ranges of the pieces of measurement data.

In step S110, the CPU 20A determines whether a processing instruction has been received. Specifically, the CPU 20A determines whether a processing instruction has been received in step S106. When the CPU 20A determines that a processing instruction has been received (step S110: YES), the CPU 20A proceeds to step S111. When the CPU 20A determines that no processing instruction has been received (step S110: NO), the CPU 20A ends the data processing.

In step S111, the CPU 20A learns the processing instruction. Specifically, the CPU 20A retrains the trained model 150 using the processing instruction received from the user. For example, the CPU 20A retrains the trained model 150 using the history data 140 in which the processing instruction is reflected. The CPU 20A ends the data processing.

### Summary of First Embodiment

In the control device 20 of the present embodiment, when the acquisition unit 240 acquires all the pieces of measurement data to be analyzed and the reception unit 210 receives the analysis range, the display control unit 200 displays the measurement images 300 and the range image 310 in a superimposed fashion so that the directions indicating the ranges agree with each other. The display control unit 200 may display a plurality of measurement images 300 and the range image 310 in a superimposed fashion. The analysis unit 220 analyzes whether the measurement range is excessive or insufficient relative to the analysis range. When there is an excess or deficiency, the display control unit 200 superimposes the instruction screen 500 for instruction on processing of the measurement data on the check screen 400 as a dialog window. When the processing unit 230 processes the measurement data in accordance with a processing instruction, the display control unit 200 displays the measurement image 301 showing the measurement range before processing and the processed image 302 showing the measurement range after processing in a superimposed fashion so that the directions showing the ranges agree with each other.

As described above, the control device 20 of the present embodiment causes the display device 26 to display the measurement image 300 and the range image 310 in a juxtaposed or superimposed fashion so that the directions indicating the ranges agree with each other. Thus, it is possible to visually display an excess or deficiency of the range of the measurement data to be analyzed relative to the analysis range. Accordingly, a processing method suitable for the measurement data can be selected in response to the user's instruction. The display device 26 displays a plurality of measurement images 300 and the range image 310 in a juxtaposed or superimposed fashion so that the directions indicating the ranges agree with each other. Thus, it is possible to visually display a list of excesses or deficiencies of the ranges of the pieces of measurement data to be analyzed relative to the analysis range. The display device 26 further displays, in a juxtaposed or superimposed fashion, the instruction screen 500 for a data processing method that causes the measurement range of the measurement data to agree with the analysis range. Thus, the measurement data processing method can be set while checking the measurement image 300 and the range image 310. The display device 26 further displays the measurement image 301 and the processed image 302 in a juxtaposed or superimposed fashion so that the directions indicating the ranges agree with each other. Thus, the change in the range of the measurement data due to processing can be displayed visually.

### Additional Notes

The control device 20 of the present embodiment displays the measurement data measured by the measurement device 24 and performs data processing as necessary. However, the present invention is not limited to this, and the control device 20 may display data having a range even if it is not measured data, and may process the data as necessary. Examples of the data having a range include price data, evaluation data, and statistical data. These pieces of data may be acquired by being transmitted from the information processing device 22, an external server (not shown), etc.

The processing method in the control device 20 of the present embodiment is not limited to the method described in the above embodiment. Examples of the processing method include a processing method in which data in a range exceeding the analysis range is deleted from the measurement range of the measurement data, and a processing method in which the data in the excessive range is moved to an insufficient range. The data interpolation includes not only filling in missing parts of the data at the right and left ends, but also filling in a missing part in the middle of the data.

The control device 20 of the present embodiment displays the mark indicating the need to process the measurement data when the measurement range of the measurement data is insufficient relative to the analysis range (see FIG. 6). However, the present invention is not limited to this, and the control device 20 may display the mark indicating the need to process the measurement data when the measurement range of the measurement data is excessive relative to the analysis range.

The control device 20 of the present embodiment highlights the portion of the measurement image 300A that overlaps the analysis range when the measurement range of the measurement data is sufficient relative to the analysis range (see FIG. 6). However, the present invention is not limited to this, and the control device 20 may highlight the measurement image 300A when the measurement range of the measurement data agrees with the analysis range.

The control device 20 of the present embodiment issues processing instructions individually for the pieces of measurement data to be processed (see FIG. 7). However, the present invention is not limited to this, and the control device 20 may issue a processing instruction collectively for all the pieces of measurement data to be processed.

The control device 20 of the present embodiment retrains the trained model 150 using the history data 140 stored in the storage 20D. However, the present invention is not limited to this, and a trained model that has been trained by online learning may be retrained using the processing instruction received in step S106 (see FIG. 10). The online learning refers to sequentially retraining and improving a trained model using new training data alone. The retraining device is not limited to the control device 20, but an external device such as the information processing device 22 may be used.

The trained model 150 of the present embodiment outputs a processing method for the measurement data when information including the measurement range of the measurement data and the analysis range is input. However, the present invention is not limited to this, and the information input to the trained model 150 may include, for example, information on the category, purpose, frequency of occurrence, evaluation, or reliability of the measurement data.

As shown in FIG. 1, the display system 10 of the present embodiment includes one information processing device 22, one measurement device 24 that communicates with the information processing device 22, and one display device 26, but the present invention is not limited to this. The display system 10 may include a plurality of information processing devices 22, a plurality of measurement devices 24, and a plurality of display devices 26. Two measurement devices 24 that communicate with the communication I/F 20E are illustrated, but the present invention is not limited to this. Three or more measurement devices 24 may be provided.

In the check screen 400 of the present embodiment, the check box 405 with a check mark indicates that the item is selected as a processing target (see FIG. 5). However, the present invention is not limited to this, and the check box 405 with a check mark may indicate that the item is selected as an analysis target.

The control device 20 of the present embodiment performs analysis using the processed data 130 including the measurement data after processing. However, the present invention is not limited to this, and the control device 20 may perform analysis using unprocessed measurement data when the analysis range and the measurement range of the measurement data agree with each other from the beginning.

The control device 20 of the present embodiment displays a plurality of measurement images 300A arranged vertically, and superimposes the range image 310 on the measurement images 300A (see FIG. 5). The control device 20 superimposes the instruction screen 500 on the check screen 400 in the form of a dialog window, and superimposes the range image 310 on the measurement image 300B (see FIG. 7). The control device 20 displays a plurality of measurement images 301 arranged vertically, superimposes the processed images 302 on the measurement images 301, and superimposes the range image 310 on the measurement images 301 (see FIG. 8). However, the display method is not limited to these methods. With the reference axis 406 set along the up-down direction, the control device 20 may display the above images or screens side by side. The control device 20 may display the above images or screens in a superimposed fashion by synthesizing or popping up the images or screens. The display in a superimposed fashion includes not only constant display by synthesis, but also temporary display by pop-up.

### Second Embodiment

A control device 20 of a second embodiment differs from that of the first embodiment in that the control device 20 presents a recommended processing method for the measurement data to be analyzed. Differences from the first embodiment will be described below. The other configuration is the same as that in the above embodiment, and detailed description thereof will be omitted.

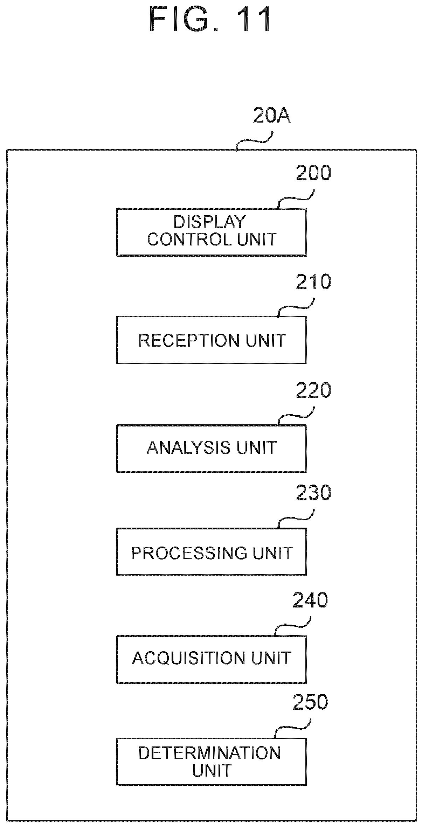

As shown in FIG. 11, the control device 20 of the present embodiment further includes a determination unit 250 in addition to the display control unit 200, the reception unit 210, the analysis unit 220, the processing unit 230, and the acquisition unit 240 by the CPU 20A executing the display program 100.

The display control unit 200 of the present embodiment has a function of displaying the instruction screen 500 in a state in which the setting values have been input. Specifically, the display control unit 200 displays the instruction screen 500 in a state in which the setting values of a processing method determined by the determination unit 250 described later have been input.

The determination unit 250 has a function of determining a recommended processing method. Specifically, the determination unit 250 determines a processing method output from the trained model 150 as the recommended processing method for the measurement data.

### Control Flow

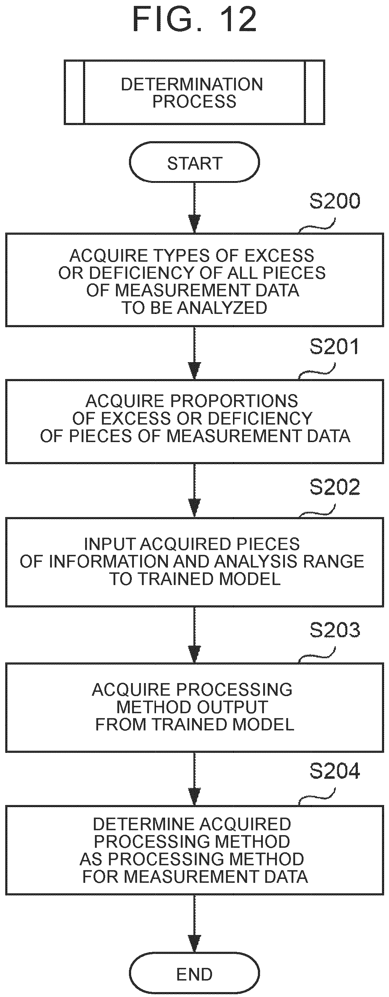

FIG. 12 is a flowchart showing a flow of a determination process for determining a recommended processing method. The determination process is, for example, performed between steps S102 and S103 (see FIG. 10).

In step S200 of FIG. 12, the CPU 20A acquires the types of excess or deficiency of the pieces of measurement data. Specifically, the CPU 20A acquires information obtained through the analysis in step S102 (see FIG. 10) as to whether the measurement range of each piece of measurement data is excessive or insufficient relative to the analysis range, and about the direction of the excess or deficiency of the data.

In step S201, the CPU 20A acquires the proportion of the excess or deficiency of each piece of measurement data. Specifically, the CPU 20A acquires information obtained through the analysis in step S102 (see FIG. 10) about the proportion of the excess or deficiency of the measurement range of each piece of measurement data relative to the analysis range.

In step S202, the CPU 20A inputs the acquired pieces of information and the analysis range to the trained model 150. Specifically, the CPU 20A inputs the pieces of information acquired in steps S200 and S201 and the analysis range received in step S101 (see FIG. 10) to the trained model 150 stored in the storage 20D.

In step S203, the CPU 20A acquires a processing method output from the trained model 150. Specifically, the CPU 20A acquires a processing method for each piece of measurement data.

In step S204, the CPU 20A determines the acquired processing method as the processing method for the measurement data. Specifically, the CPU 20A determines each processing method acquired in step S203 as the recommended processing method for each piece of measurement data. The CPU 20A ends the determination process. After the determination process has ended, the CPU 20A displays, in step S105 (see FIG. 10), the instruction screen 500 in a state in which the setting values of the determined processing method have been input.

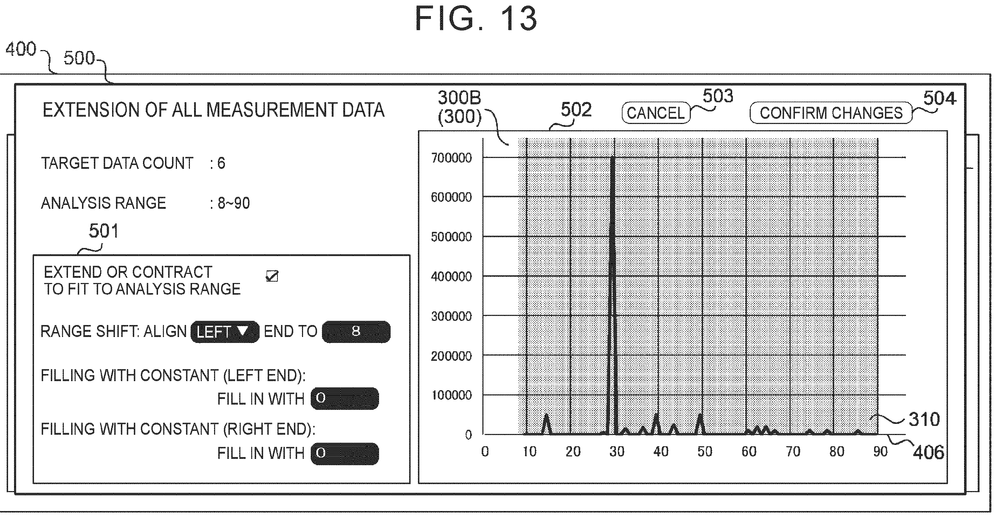

As shown in FIG. 13, the CPU 20A displays the instruction screen 500 according to the second embodiment in step S105 (see FIG. 10).

An example of the instruction screen 500 shown in FIG. 13 will be described below. Differences from FIG. 7 will be described below. The other configuration is the same as that in FIG. 7, and detailed description thereof will be omitted.

In the instruction field 501, the setting values of the processing method determined in step S204 (see FIG. 12) are displayed in an input state. That is, the recommended processing method has already been input. In the example of FIG. 13, a check mark is put in the check box as to whether to extend or contract the measurement data, alignment of the "left" end with "8" is input as the shift of the measurement data, and filling in both the right and left ends with "0" is input as the interpolation of the measurement data. White characters on a black background indicate the input state and do not show the actual display.

A measurement image 300B showing the measurement data when the processing method determined in step S204 (see FIG. 12) is applied is displayed in the measurement image field 502. A measurement image 300B before the processing method is applied may be displayed.

### Summary of Second Embodiment

The control device 20 of the second embodiment determines a processing method to be recommended for use based on the measurement data to be analyzed and the trained model 150 trained from the history data 140. The control device 20 causes the display device 26 to display the determined processing method in a state in which the processing method has been input to the instruction screen 500.

As described above, the control device 20 of the second embodiment determines the processing method to be recommended for use based on the measurement data and the history data 140, and causes the display device 26 to display the processing method. Thus, it is possible to display the processing method suitable for the measurement data to be analyzed.

### Additional Notes

In the control device 20 of the second embodiment, the trained model 150 is trained by the control device 20. However, the present invention is not limited to this, and the trained model 150 may be trained by an external device (e.g., the information processing device 22) connected to the control device 20. When the trained model 150 is trained by the information processing device 22, the information processing device 22 acquires the history data 140 from the control device 20 and trains the trained model 150 based on the history data 140. The information processing device 22 provides the trained model 150 to the control device 20. The providing method may be a method of transmitting the trained model 150 itself to the control device 20, or a method of storing the trained model 150 in the information processing device 22 and transmitting only the output result of the trained model 150 to the control device 20.

In the control device 20 of the second embodiment, a processing method output by inputting information including the measurement data and the analysis range to the trained model 150 is presented to the user. However, the present invention is not limited to this, and the control device 20 may refer to the history data 140 and present, to the user, a frequently selected processing method, a previously set processing method, etc. as the recommended processing method. That is, the control device 20 determines the processing method to be recommended for use based on the trained model 150 trained from the history data 140 without using the measurement data to be analyzed.

The control device 20 of the second embodiment determines the recommended processing method for each piece of measurement data. However, the present invention is not limited to this, and the control device 20 may determine a recommended processing method for collectively processing all the pieces of measurement data. Examples of the recommended processing method for collectively processing all the pieces of measurement data include a method of selecting a processing method with the highest commonality from among the processing methods recommended for the individual pieces of measurement data, and a method of determining a processing method based on the history of processing methods used when collectively processing the pieces of data.

### Remarks

Various processes performed by the CPU 20A reading and executing software (programs) in each of the above embodiments may be performed by various processors other than the CPU. Examples of the processors in this case include a programmable logic device (PLD) such as a field-programmable gate array (FPGA) having a circuit configuration that can be changed after manufacture, and a dedicated electric circuit such as an application specific integrated circuit (ASIC) that is a processor having a circuit configuration designed exclusively to perform a specific process. The above processes may be performed by one of the various processors or by a combination of two or more processors of the same or different types (e.g., a plurality of FPGAs or a combination of a CPU and an FPGA). More specifically, each of the hardware structures of the various processors is an electric circuit that combines circuit elements such as semiconductor elements.

In each of the above embodiments, the programs have been described as being stored (installed) in advance in a non-transitory computer-readable recording medium. For example, the display program 100 in the control device 20 is stored in advance in the ROM 20B. However, the present invention is not limited to this, and each program may be provided by being recorded on a non-transitory recording medium such as a compact disc read only memory (CD-ROM), a digital versatile disc read only memory (DVD-ROM), or a universal serial bus (USB) memory. The program may be downloaded from an external device via a network.

The process flow described in each of the above embodiments is also one example, and unnecessary steps may be omitted, new steps may be added, or the process order may be changed without departing from the spirit of the invention.

## Claims

1. A display control device (20) comprising a processor (20A) configured to:
cause a display device (26) to display a data image (300) indicating a visualized measurement range of analysis target data (120) and a range image (310) indicating a visualized analysis range of the analysis target data (120) in a juxtaposed or superimposed fashion in which directions of the visualized measurement range and the visualized analysis range agree with each other; and
perform a predetermined analysis in an analysis range.

2. The display control device (20) according to claim 1, wherein the processor (20A) is configured to cause the display device (26) to display a plurality of the data images (300) and the range image (310) in the juxtaposed or superimposed fashion in which the directions of the visualized measurement ranges and the visualized analysis range agree with each other.

3. The display control device (20) according to claim 1 or 2, wherein the processor (20A) is configured to cause the display device (26) to further display a setting screen (500) for a data processing method in the juxtaposed or superimposed fashion, the data processing method being method of causing the visualized measurement range to agree with the visualized analysis range (310).

4. The display control device (20) according to claim 3, wherein the processor (20A) is configured to cause the display device (26) to display the data image (300) before being processed by the data processing method and the data image (302) after being processed by the data processing method in the juxtaposed or superimposed fashion in which the direction of the visualized measurement range of the data image (300) before being processed by the data processing method and the direction of the visualized measurement range of the data image (302) after being processed by the data processing method agree with each other.

5. The display control device (20) according to claim 3, wherein the processor (20A) is configured to:
determine the data processing method to be recommended for use based on at least one of the analysis target data (120) and a history of the processing methods selected by a user; and
cause the display device (26) to display the determined data processing method.

6. A display method to be performed by a computer, the display method comprising:
causing a display device to display a data image (300) indicating a visualized measurement range of analysis target data (120) and a range image (310) indicating a visualized analysis range of the analysis target data (120) in a juxtaposed or superimposed fashion in which directions of the visualized measurement range and the visualized analysis range agree with each other; and
performing a predetermined analysis in an analysis range.

7. A display program (100) to be executed by a computer, the display program (100) causing the computer to perform a process comprising:
causing a display device (26) to display a data image (300) that indicating a visualized measurement range of analysis target data (120) and a range image (310) indicating a visualized analysis range of the analysis target data (120) in a juxtaposed or superimposed fashion in which directions of the visualized measurement range and the visualized analysis range agree with each other; and
performing a predetermined analysis in an analysis range.
